# DEMANDE DE BREVET EUROPEEN

(11) **EP 0 832 902 A2**
(43) Date de publication de la demande: **01.04.1998**
(21) Numéro de dépôt: 97120435.9
(22) Date de dépôt: 02.02.1996
(51) Int. Cl.: C08F 4/00, C08F 12/08

(54) **Polymérisation en présence d'un radical nitroxyde bèta-substitué**

(30) Priorité: 07.02.1995 FR 9501380; 13.06.1995 FR 9506967
(62) Demande divisionnaire de: 96903043.6
(71) Demandeur: ELF ATOCHEM S.A., 92800 Puteaux (FR)
(72) Inventeur: Grimaldi, Sandra, 13090 Aix-En-Provence (FR); Lemoigne, François, 13012 Marseille (FR); Finet, Jean-Pierre, 13280 Raphele Les Arles (FR); Tordo, Paul, 13004 Marseille (FR); Nicol, Pascal, 64000 Pau (FR); Plechot, Muriel, 64300 Orthez (FR); Gnanou, Yves, 33400 Talence (FR)

(57) **Abrégé**

L'invention concerne un procédé de polymérisation ou copolymérisation d'au moins un monomère polymérisable par voie radicalaire en présence d'un radical libre stable de la famille des nitroxydes. Le radical libre stable est β-substitué et procure un excellent contrôle de la polydispersité tout en assurant une meilleure vitesse de polymérisation ou copolymérisation, si on les compare avec les radicaux libres stables mis en oeuvre par l'art antérieur.

## Description

### DOMAINE TECHNIQUE :

L 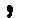 invention concerne un procédé de polymérisation ou copolymérisation d 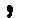 au moins un monomère polymérisable par voie radicalaire en présence d 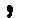 un radical libre stable de la famille des nitroxydes.

### TECHNIQUE ANTERIEURE :

La présence d 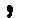 un radical libre stable lors de la polymérisation ou copolymérisation de monomères procure un contrôle de la polymérisation et mène à des polymères à la polydispersité plus resserrée.

La qualité d 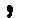 un contrôle de polymérisation ou copolymérisation peut également être appréciée par l 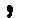 observation de l 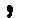 augmentation de la masse moléculaire moyenne en nombre en fonction du pourcentage de conversion des monomères en polymère ou copolymère. Lorsque le contrôle est bon, la masse moléculaire moyenne en nombre est linéairement proportionnelle au pourcentage de conversion. Plus on s 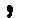 écarte de la linéarité, moins le contrôle est bon.

Les brevets US 5 322 912 et US 5 401 804 illustrent l 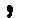 action de radicaux libres stables sur la polymérisation du styrène. Le brevet US 5 412 047 illustre l 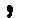 action de radicaux libres stables sur la polymérisation des acrylates. Le brevet US 5 449 724 illustre l 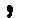 action de radicaux libres stables sur la polymérisation de l 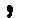 éthylène. Les documents qui viennent d 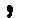 être cités mentionnent comme radicaux libres stables des molécules cycliques lesquelles présentent en β de l 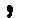 atome d 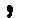 azote du groupement nitroxyde un groupement de faible masse moléculaire, lesdites molécules présentant notamment l 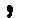 inconvénient de ralentir considérablement la vitesse de polymérisation ou copolymérisation, de sorte qu 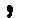 il est parfois difficile voire impossible de mener cette polymérisation ou copolymérisation à une température suffisamment basse pour que la polydispersité du polymère final soit suffisamment resserrée.

En effet, plus la température du milieu est élevée, moins le contrôle de la polymérisation ou copolymérisation est bon, de sorte que le polymère ou copolymère final présente une plus forte polydispersité.

### EXPOSE DE L'INVENTION :

L 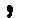 invention pallie aux inconvénients ci-dessus évoqués. Les radicaux libres stables mis en jeu dans le cadre de la présente invention procurent un excellent contrôle de la polydispersité tout en assurant une meilleure vitesse de polymérisation ou copolymérisation, si on les compare avec les radicaux libres stables mis en oeuvre par l 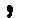 art antérieur.

Un autre avantage de l'invention est de permettre la préparation de copolymères à blocs. En effet, la polymérisation d'un premier monomère en présence d'un radical libre stable mène à un bloc de polymère vivant. Il est alors possible d'accoler à ce premier bloc un bloc d'un autre polymère en plaçant le premier bloc de polymère viant dans un milieu de polymérisation d'une second monomère. Il est ainsi possible de réaliser des copolymères à blocs, par exemple, des copolymères comprenant un ou plusieurs blocs de polystyrène et un ou plusieurs blocs de polybutadiène. La préparation de tels copolymères est habituellement très difficile par les voies radicalaires de l'art antérieur et, pour leur préparaiton, il est généralement fait appel aux procédés de copolymérisation par voie anionique.

La réalisation de tels copolymères par voie radicalaire nécessite un bon contrôle de la polymérisation de chacun des blocs. En effet, si une réaction de terminaison vient interrompre la croissance par polymérisation d'un bloc, il ne sera pas possible de lui accoler un bloc d'un autre monomère. Les réactions de terminaison doivent donc être le moins fréquentes possible. Il y a moins de réactions de terminaisons lorsqu'au cours de la polymérisation, la masse moléculaire moyenne en nombre est mieux linéairement proportionnelle au pourcentage de conversion. L'existence de réactions de terminaison se traduit par une diminution de la vitesse d'augmentation de la masse moléculaire moyenne en nombre en fonciton du pourcentage de conversion.

L 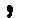 invention concerne la polymérisation ou copolymérisation d 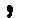 au moins un monomère polymérisable en présence d 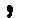 un radical libre stable de la famille des nitroxydes comprenant un enchaînement de formule : 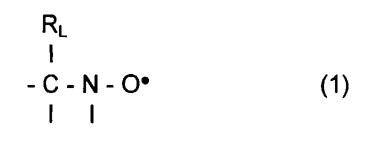 dans laquelle le radical R_{L} présente une masse molaire supérieure à 15. Le radical R_{L}, monovalent, est dit en position β par rapport à l 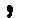 atome d 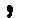 azote du radical nitroxyde. Les valences restantes de l 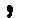 atome de carbone et de l 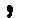 atome d 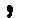 azote dans la formule (1) peuvent être liées à des radicaux divers tels qu 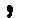 un atome d 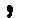 hydrogène, un radical hydrocarboné comme un radical alkyle, aryle ou aralkyle, comprenant de 1 à 10 atomes de carbone. Il n 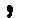 est pas exclu que l 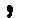 atome de carbone et l 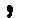 atome d 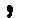 azote dans la formule (1) soient reliés entre eux par l 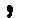 intermédiaire d 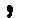 un radical bivalent, de façon à former un cycle. De préférence cependant, les valences restantes de l 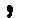 atome de carbone et de l 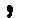 atome d 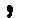 azote de la formule (1) sont liées à des radicaux monovalents. De préférence, le radical R_{L} présente une masse molaire supérieure à 30. Le radical R_{L} peut par exemple avoir une masse molaire comprise entre 40 et 450. A titre d 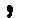 exemple, le radical R_{L} peut être un radical comprenant un groupement phosphoryle, ledit radical R_{L} pouvant être représenté par la formule : 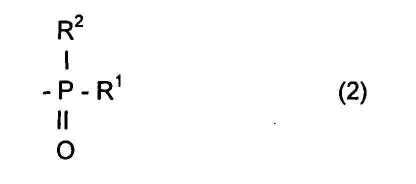 dans laquelle R¹ et R² , pouvant être identiques ou différents, peuvent être choisis parmi les radicaux alkyle, cycloalkyle, alkoxyle, aryloxyle, aryle, aralkyloxyle, perfluoroalkyle, aralkyle, et peuvent comprendre de un à 20 atomes de carbone. R¹ et/ou R² peuvent également être un atome d'halogène comme un atome de chlore ou de brome ou de fluor ou d'iode. Le radical R_{L} peut également comprendre au moins un cycle aromatique comme pour le radical phényle ou le radical naphtyle, ce dernier pouvant être substitué, par exemple par un radical alkyle comprenant de un à quatre atomes de carbone.

A titre d 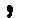 exemple, le radical libre stable peut être choisi dans la liste suivante :
N-tertiobutyl-1-phényl-2 méthyl propyl nitroxyde,
N-tertiobutyl-1-(2-naphtyl)-2-méthyl propyl nitroxyde,
N-tertiobutyl-1-diéthylphosphono-2,2 diméthyl propyl nitroxyde,
N-tertiobutyl-1-dibenzylphophono-2,2-diméthyl propyl nitroxyde,
N-phényl-1-diétyl phosphono-2,2-diméthyl propyl nitroxyde,
N-phényl-1-diétyl phosphono-1-méthyl éthyl nitroxyde,
N-(1-phényl 2-méthyl propyl)-1-diéthylphosphono-1-méthyl éthyl nitroxyde.

Le radical libre stable peut être introduit dans le milieu de polymérisation ou copolymérisation à raison de 0,005 % à 5 % en poids de la somme de la masse de monomère polymérisable et de radical libre stable.

Dans le cadre de la présente invention, tout monomère présentant une double liaison carbone-carbone susceptible de polymériser ou copolymériser par voie radicalaire, peut être utilisé.

Au moins un monomère présent dans le milieu de polymérisation ou copolymérisation peut être un monomère vinylaromatique ou une oléfine ou un diène ou un monomère acrylique ou méthacrylique. Le monomère peut également être le difluorure de vinylidène ou le chlorure de vinyle.

Par monomère vinylaromatique, on entend le styrène, le styrène substitué sur le groupement vinyle par un groupement alkyle tel que l 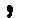 alpha-méthylstyrène ou l 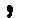 ortho-vinyltoluène, le para-vinyltoluène, l 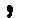 ortho-éthylstyrène, le 2,4-diméthylstyrène, le styrène substitué sur le cycle par un halogène comme par exemple le 2,4-dichlorostyrène ainsi que le vinylanthracène.

Par diène, on entend en particulier un diène conjugué comprenant de 4 à 8 atomes de carbone tel que le 1,3-butadiène, l 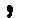 isoprène, le 2,3-diméthyl-1,3-butadiène, le pipérylène.

Le procédé selon l 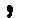 invention est plus particulièrement efficace dans le cas des monomères vinylaromatiques et des diènes.

La polymérisation ou copolymérisation est réalisée dans les conditions habituelles connues de l 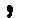 homme du métier compte tenu du ou des monomères considérés, du moment que cette polymérisation ou copolymérisation intervient par un mécanisme radicalaire, et à la différence que l 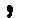 on ajoute au milieu le radical libre stable β-substitué, conformément à l 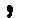 invention. Suivant la nature du ou des monomères que l'on souhaite polymériser, il peut être nécessaire d'introduire dans le milieu de polymérisation ou copolymérisation un initiateur de radicaux libres. L'homme du métier connaît les monomères qui nécessitent la présence d'un tel initiateur pour que ce monomère polymérise ou copolymérise. Par exemple, la polymérisation ou copolymérisation d'un diène nécessite la présence d'un initiateur de radicaux libres.

L'initiateur de radicaux libres peut-être introduit dans le milieu de polymérisation ou copolymérisation à raison de 50 à 50 000 ppm sur la base de la masse de monomère polymérisable ou copolymérisable.

L 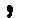 initiateur de radicaux libres peut par exemple être choisi parmi ceux de type peroxyde ou de type azo. on peut citer à titre d 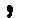 exemple les initiateurs suivants : peroxyde de benzoyle, peroxyde de lauroyle, peracétate de tert-butyle, perpivalate de tert-amyle, per-2-éthylhexanoate de butyle, perpivalate de tert-butyle, pernéodécanoate de tert-butyle, perisononanoate de tert-butyle, pernéodécanoate de tert-amyle, perbenzoate de tert-butyle, peroxydicarbonate de di-2-ethylhexyle, peroxydicarbonate de dicyclohexyle, pernéodecanoate de cumyle, permaléate de tert-butyle, 2,2'-azobis(isobutyronitrile), 2,2'-azobis(2,4-diméthyl-valéronitrile), 2,2'-azobis(cyclohexanenitrile), 2,2'-azobis-(2-méthylbutyronitrile), 2,2'-azobis(2,4-diméthyl-4-méthoxyvaléronitrile).

Pour le cas où le milieu comprend un monomère vinylaromatique et que l'on souhaite un excellent contrôle de la croissance du polymère ou copolymère de façon à ce que ce dernier soit de polydispersité particulièrement étroite, il est préférable de mener la polymérisation ou copolymérisation à une température à laquelle aucune polymérisation ou copolymérisation n 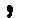 est observée en l 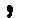 absence d 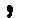 initiateur de radicaux libres, et d 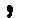 ajouter un initiateur de radicaux libres dans le milieu. Par exemple, dans le cas de la polymérisation ou copolymérisation d 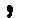 au moins un monomère vinylaromatique, on est dans cette situation lorsque la température est inférieure à environ 120°C. Des vitesses appréciables de polymérisation ou copolymérisation sont néanmoins obtenues lorsque la température est comprise entre 90 et 120°C, et que l'on a ajouté un initiateur de radicaux libres au milieu.

Néanmoins, si l 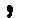 on accepte une polydispersité plus élevée, il n 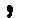 est pas exclu de chauffer le milieu à de plus fortes températures.

Ainsi, dans le cas où le milieu comprend un monomère vinylaromatique, la polymérisation ou copolymérisation peut être initiée thermiquement et sans initiateur de radicaux libres, auquel cas elle est généralement conduite entre 120 et 200°C et de préférence entre 120 et 160°C. Si un initiateur de radicaux libres a été introduit, il est possible de réaliser la polymérisation ou copolymérisation entre 25 et 120°C mais on peut également, suivant la nature de l 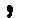 initiateur et en particulier sa température de demi-vie, chauffer jusqu 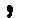 à 200°C, si l 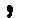 on préfère une plus grande vitesse de polymérisation au détriment de la polydispersité.

Dans le cas où le milieu comprend un monomère vinylaromatique, la polymérisation ou copolymérisation peut être menée en masse, en suspension ou en solution.

Dans le cas d 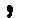 un diène, la polymérisation ou copolymérisation est généralement réalisée en solution ou suspension. Le milieu de polymérisation ou copolymérisation peut être destiné à mener à un polymère vinylaromatique choc, auquel cas il comprend généralement au moins un monomère vinylaromatique et un caoutchouc, ce dernier étant généralement un polydiène conjugué tel qu 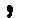 un ou plusieurs polybutadiènes.

L'invention concerne également la préparation de copolymères. Par exemple, lorsqu'au moins un monomère vinylaromatique est présent dans le milieu, on peut copolymériser ce monomère avec, par exemple, au moins un monomère choisi parmi l'acrylonitrile, le méthacrylonitrile, l'acide acrylique, l'acide méthacrylique, un ester d'alkyle dont le groupement alkyle contient de 1 à 4 atomes de carbone, un N-alkylamléimide dont le groupement alkyle contient de 1 à 4 atomes de carbone, le N-phénylmaléimide.

Bien entendu, suivant les conditions de polymérisation ou copolymérisation, et en particulier la durée, la température, le degré de conversion de monomère en polymère ou copolymère, il est possible de réaliser des produits de masse moléculaire très différente.

L 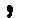 invention concerne à la fois la préparation d'oligomères, polymères ou copolymères de masse moléculaire moyenne en poids inférieure à 10 000, que celle de polymères ou copolymères de masse moléculaire moyenne en poids supérieure à 10 000, comme les hauts-polymères de masse moléculaire moyenne en poids allant généralement de 100 000 à 400 000.

L 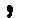 invention concerne à la fois les procédés de polymérisation ou copolymérisation dont le taux de conversion de monomère en polymère ou copolymère est inférieur à 50 % que ceux dont le aux de conversion de monomère en polymère ou copolymère est supérieur à 50 %.

Le procédé de préparation de l 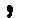 amine secondaire comprend une étape de réaction entre :
- un composé C comprenant un groupement carbonyle,
- une amine primaire,
- un dérivé phosphoré comprenant un groupement phosphoryle.

Le composé C peut par exemple être représenté par la formule 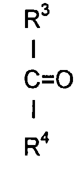 dans laquelle R³ et R⁴ ,
pouvant être identiques ou différents, peuvent représenter divers radicaux tels qu 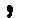 un atome d 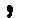 hydrogène ou un radical alkyle, aryle ou aralkyle comprenant par exemple de 1 à 10 atomes de carbone. Les radicaux R³ et R⁴ peuvent également être reliés entre eux de façon à former un cycle incluant l 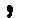 atome de carbone du groupement carbonyle. Le composé C peut être choisi parmi les aldéhydes ou les cétones.

A titre d 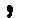 exemple, le composé C peut être :
- le triméthylacétaldéhyde,
- l'isobutyraldéhyde,
- la diéthylcétone,
- la dibutylcétone,
- la méthyléthylcétone
- la cyclohexanone,
- la 4-tertiobutylcyclohexanone,
- la tétralone.

L 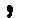 amine primaire peut être représentée par la formule R⁵-NH₂ dans laquelle R⁵ peut représenter par exemple un radical hydrocarboné linéaire ou ramifié, saturé ou insaturé, pouvant comprendre au moins un cycle, ledit radical comprenant de 1 à 30 atomes de carbone, tel qu 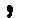 un radical alkyle, aryle, aralkyle. A titre d 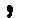 exemple, le radical R⁵ peut être choisi parmi les radicaux suivants : méthyle, éthyle, propyle, isopropyle, tertiobutyle, diphénylméthyle, triphénylmétyle, phényle, naphtyle, benzyle, phényl-1-éthyle.

Le dérivé phosphoré peut être représenté par la formule HP(O)(R⁶)(R⁷) dans laquelle R⁶ et R⁷ , pouvant être identiques ou différents, peuvent être choisis parmi les radicaux alkyle, cycloalkyle, alkoxyle, aryloxyle, aryle, aralkyloxyle, perfluoroalkyle, aralkyle, et peuvent comprendre de un à 20 atomes de carbone. R⁶ et/ou R⁷ peuvent également être un atome d'halogène comme un atome de chlore ou de brome ou de fluor ou d'iode. A titre d 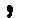 exemple, les radicaux R⁶ et R⁷ peuvent être choisis parmi les radicaux suivants : méthyle, éthyle, n-propyle, isopropyle, tertiobutyle, n-butyle, phényle, benzyle, benzyle, méthoxyle, éthoxyle, trifluorométhyle, benzyloxyle.

A titre d 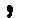 exemple, le dérivé phosphoré peut être : le phosphite de diéthyle, le phophite de dibenzyle, le phosphite de diisopropyle, le phosphite de di-n-dodécyle, la diphénylphosphine oxyde, la dibenzylphosphine oxyde.

Pour la réaction, on met de préférence tout d 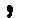 abord en contact le composé C et l 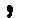 amine primaire, puis dans un deuxième temps, on ajoute le dérivé phosphoré.

L 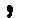 étape de réaction peut être effectuée par exemple entre 0 et 100°C, et de préférence entre 20 et 60°C.

De préférence, le rapport molaire du dérivé phosphoré sur le composé C est supérieur à 1.

De préférence, le rapport molaire du composé C sur l 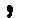 amine primaire va de 0,8 à 1,5.

A la suite de l 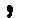 étape de réaction, le milieu contient une amine secondaire, également objet de la présente invention. Cette amine secondaire peut, si nécessaire, être isolée de toute façon appropriée.

En particulier, on peut acidifier le milieu par une solution aqueuse d 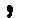 acide chlorhydrique pour former un chlorhydrate de l 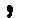 amine secondaire, puis ajouter au milieu un solvant organique tel qu 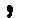 un éther pour solubiliser les espèces à éliminer, puis isoler la phase aqueuse, puis ajouter dans cette phase aqueuse du carbonate de sodium pour libérer l 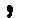 amine secondaire. Cette dernière est ensuite extraite par un solvant organique tel qu 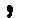 un éther pour être ensuite isolée après évaporation du solvant.

L 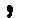 amine secondaire peut être représentée par la formule : 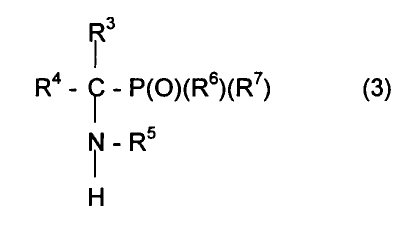 dans laquelle les radicaux R³, R⁴, R⁵, R⁶ et R⁷ conservent les significations précédemment données.

L 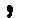 amine secondaire peut servir à la préparation d 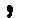 un nitroxyde.

Le procédé de préparation de ce nitroxyde, comprend, après formation de l 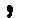 amine secondaire, une étape d 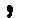 oxydation de cette amine secondaire, capable de remplacer son groupement >N-H par un groupement >N-O_{•} . On liste ci-après, de façon non exhaustive quelques techniques appropriées :
- réaction de l 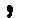 amine secondaire avec l 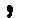 eau oxygénée, dont le principe est enseigné par la demande de brevet EP 0 488 403 ;
- réaction de l 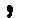 amine secondaire avec le diméthyldioxirane suivant le principe enseigné dans R.W. Murray et M. Sirgh, Tetrahedron Letters, 1988, 29(37), 4677-4680 (ou US 5 087 752) ;
- réaction de l 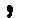 amine secondaire avec l 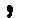 acide métachloroperbenzoïque (MCPBA), selon le principe enseigné dans J. Am. Chem. Soc., 1967, 89(12), 3055-3056.

On peut également utiliser les techniques décrites dans les demandes de brevet EP 0 157 738 et GB 1 199 351.

Pour ce qui concerne la méthode d 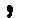 oxydation au MCPBA, on préfère réaliser l 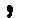 oxydation dans les conditions suivantes :
- rapport molaire de l 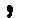 amine secondaire sur le MCPBA compris entre 0,5 et 1 et de manière encore préférée entre 0,8 et 1 ;
- température comprise entre -10 et 10°C,
- utilisation d 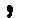 un solvant inerte de façon à pouvoir mieux contrôler l 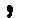 exothermicité de la réaction. Ce solvant peut par exemple être choisi dans la famille des solvants chlorés comme le dichlorométhane, ou le chlroforme.

Le nitroxyde peut être représenté par la formule : 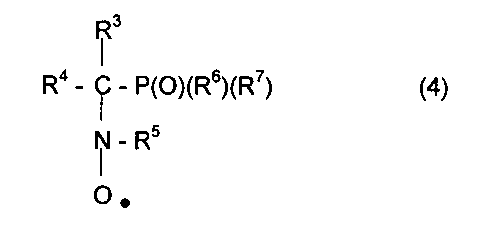 dans laquelle les radicaux R³, R⁴, R⁵, R⁶ et R⁷ conservent les significations précédemment données. A la suite de cette étape d 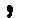 oxydation au MCPBA, le nitroxyde peut être purifié, par exemple par élution sur colonne de silice, puis isolé après évaporation des solvants éventuellement nécessaires.

### MANIERE DE REALISER L'INVENTION :

On donne ci-après la signification de quelques abréviations utilisées dans les exemples :
- Per. Benz.: : Peroxyde de Benzoyle
- AIBN: : 2,2'-azobis(isobutyronitrile)
- Tempo: : 2,2,6,6-tétraméthyl-1-piperidinyloxy
- DTBN: : di-tertiobutylnitroxyde

### Exemple 1

### a) Synthèse du 2,2-diméthyl-1-(1,1-diméthyléthyl-amino)propyl phosphonate de diéthyle

On mélange à la température ambiante sous atmosphère d 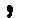 azote, dans un ballon bicol de 250 ml muni d 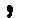 une agitation magnétique et d 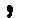 une ampoule à addition 6,68 g (0,077 mole) de pivalaldéhyde et 5,62 g (0,077 mole) de tertiobutyl amine. Le mélange est ensuite porté à 30°C pendant une heure. Après retour à la température ambiante, on ajoute goutte à goutte au milieu 26,23 g (0,19 mole) de phosphite de diéthyle à la température ambiante. Le mélange est ensuite porté sous agitation à 40°C pendant 24 heures.

Après retour à la température ambiante, on ajoute 20 ml d 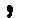 éther diéthylique et l 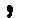 on refroidit à 10°C. On acidifie alors le milieu par une solution aqueuse à 5% en volume d 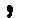 acide chlorhydrique, jusqu 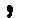 à l 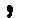 obtention d 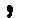 un pH de 3 dans la phase aqueuse. On ajoute alors 120 ml d 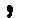 éther diéthylique. On ajoute ensuite 10 g d'hydrogéno-carbonate de sodium pur, jusqu 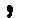 à l 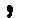 obtention d 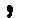 un pH de 8 dans la phase aqueuse. On extrait ensuite l 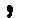 amine par quatre extractions successives de 60 ml d 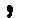 éther diéthylique chacune, puis on sèche la phase organique ainsi obtenue par environ 5 g de sulfate de sodium anhydre. Après filtration, on évapore le solvant à l 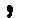 évaporateur rotatif à 40°C sous 1 mbar, puis à l 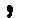 aide d 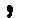 une rampe à vide à température ambiante sous 0,2 mbar. On a ainsi obtenu 19,36 g de 2,2-diméthyl-1-(1,1-diméthyléthylamine)propyl phosphonate de diéthyle. Les caractéristiques RMN de ce produit sont les suivantes :
RMN ¹H dans CDCl₃ :
   0,99 ppm (s ; 9H ; tBu) ;
   1,06 ppm (s ; 9H ; tBu) ;
   1,28 ppm (t ; 6H ; J_{H-H} = 7,1Hz : CH₃) ;
   2,69 ppm (d ; 1H ; J_{H-P} = 17,9 Hz ; H en à du P) ;
   4,06 ppm (massif ; 4H ; J_{H-H} =7,1Hz ; CH₂).
RMN ¹³C dans CDCl₃ :
   16,49 ppm (d ; J_{C-P} = 5,5Hz ; C₁₃-C₁₁) ;
   27,90 ppm (d ; J_{C-P} = 6,1Hz ; C₅-C₄-C₃) ;
   30,74 ppm (s ; C₇-C₈-C₉) ;
   35,24 ppm (d ; J_{C-P} = 9,6HZ ; C₂) ;
   50,93 ppm (s ; C₆) ;
   59,42 ppm (d ; J_{C-P} = 132,9Hz ; C₁) ;
   61,39 ppm (d ; J_{C-P} = 7,1HZ ; CH₂).
RMN ³¹P dans CDCl₃ :
   29,84 ppm.

### b) Synthèse du N-tertiobutyl-1-diéthylphosphono-2,2-diméthyl propyl nitroxyde

On dissout 2,28 g (0,0082 mole) de l 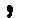 amine préparée au a) dans 5 ml de dichlorométhane, à température ambiante, puis on introduit la solution ainsi obtenue dans un ballon refroidi à 0°C et muni d 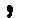 une agitation magnétique. On additionne au goutte à goutte une solution de 1,29 g (0,0075 mole) d 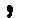 acide métachloroperbenzoïque (MCPBA) dans 5 ml de dichlorométhane. Après 6 heures d 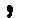 agitation à température ambiante, on ajoute au mélange une solution aqueuse saturée de NaHCO₃ jusqu 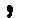 à disparition du dégagement de CO₂, soit environ 30 ml de cette solution. On récupère la phase organique que l 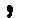 on sèche par environ 5 g de sulfate de sodium. On élimine ensuite le solvant à l 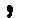 évaporateur rotatif à 40°C sous 1 mbar puis à l 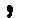 aide d 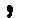 une rampe à vide à température ambiante sous 0,2 mbar. On obtient ainsi 1,39 g d 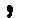 une huile orange. On purifie cette huile sur une colonne de diamètre de 4 cm et 30 cm de hauteur contenant 100 g de silice (silicagel 60, granulométrie 0,040-0,063 mm) en procédant comme suit : On prépare une suspension comprenant les 100 g de silice mélangés avec 200 ml d'un éluant constitué d 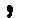 un mélange CH₂Cl₂/THF/pentane dans les proportions volumiques de 1/1/2. La colonne est remplie de cette suspension et on laisse reposer une heure, puis l'on dépose en tête de colonne les 1,39 g d'huile orange sous la forme d'une solution à 80 % en volume dans l'éluant. Au moins 200 ml d'éluant sont nécessaires pour purifier le produit. Le liquide en pied de colonne est récupéré par fractions de 15 ml. On procède ensuite à l 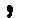 élimination des espèces volatiles, tout d 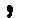 abord à l 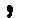 évaporateur rotatif à 40°C jusqu 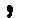 à une pression résiduelle de 1 mbar puis à l 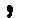 aide d 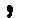 une rampe à vide à la température ambiante sous 0,2 mbar. On recueille finalement 1,06 g de N-tertiobutyl-1-diéthyl-phosphono-2,2-diméthyl propyl nitroxyde et dont la formule développée est :

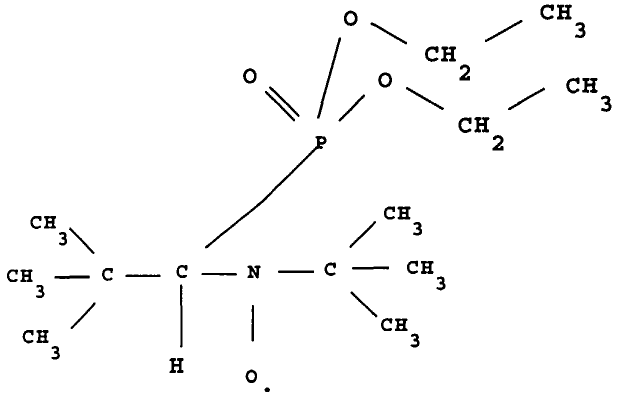

L 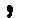 analyse élémentaire du produit final est conforme aux valeurs calculées. Les données RPE de ce produit sont les suivantes :
a_{P} = 45,26 G
a_{N} = 14,27 G
g = 2,0061 (facteur de Landé)

Ce radical est stable dans la mesure où son spectre RPE ne montre pas de modification sensible après un stockage de deux mois à 25°C.

Par souci de simplification, ce produit est appelé β-P.

### Exemple 2

### a) Synthèse du magnésien (CH₃)₂CH-MgBr

Dans un ballon bicol de 250 ml muni d 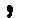 une agitation magnétique et d 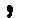 un réfrigérant comprenant un piège à CaCl₂, on place 1 g (0,041 mole) de copeaux de magnésium recouverts de 10 ml d 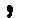 éther diéthylique, puis un cristal (environ 5 mg) d 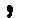 iode, ce dernier ayant pour fonction d 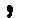 activer le magnésium et de démarrer la réaction.

On additionne ensuite au goutte à goutte et par l 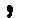 intermédiaire d 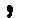 une ampoule à addition 5,04 g de bromure d 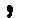 isopropyle (0,041 mole)dilué dans 10 ml d 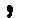 éther diéthylique. Le milieu est laissé sous agitation à la température ambiante pendant 3 heures.

### b) Préparation du N-tertiobutyl-1-phényl-2-méthyl propyl nitroxyde

Dans un ballon bicol de 100 ml muni d 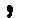 une agitation magnétique et d 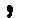 un réfrigérant, purgé à l 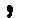 azote, on place 0,3 g de phényl-N-tertiobutylnitrone (PBN) soit 0,0017 mole, en solution dans 5 ml d 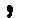 éther diéthylique. On verse ensuite au goutte à goutte, la solution du magnésien préparée au a). On ajoute ensuite 10 ml d 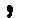 eau distillée, et le mélange est laissé sous agitation à la température ambiante pendant 2 heures. On procède alors à une extraction par 2 fois 20 ml d 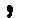 éther diéthylique, puis la phase organique est séchée par 5 g de sulfate de sodium. Après filtration, on procède à une élimination des espèces volatiles de la solution organique à l 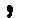 aide d 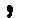 un évaporateur rotatif à 40°C jusqu 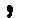 à 1 mbar, puis à l 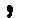 aide d 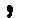 une rampe à vide à température ambiante sous 0,2 mbar. On obtient ainsi 0,42 g d 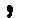 un liquide jaune-orange. On procède ensuite à une purification sur silice identique à celle décrite à l 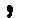 exemple 1b) sauf que l 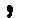 éluant est un mélange pentane/acétone dans un rapport volumique de 90/10. Après évaporation de l 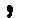 éluant de la même façon qu 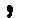 à l 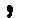 exemple 1b), on recueille 0,1 g de N-tertiobutyl-1-phényl-2-méthyl-propyl nitroxyde dont la formule développée est :

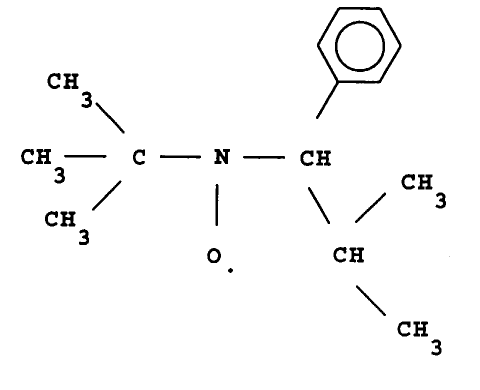

L 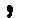 analyse élémentaire du produit final est conforme aux valeurs calculées. Les données RPE de ce produit sont les suivantes :
a_{N} = 15,21 G
a_{H} = 3,01 G.

Ce radical est stable dans la mesure où son spectre RPE ne montre pas de modification sensible après un stockage de deux mois à 25°C. Par souci de simplification, ce produit est appelé β-ϕ.

### Exemples 3 à 16

Dans un réacteur en acier inoxydable de 0,25 litre équipé d 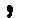 un agitateur à ruban et d 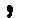 une régulation de température, on introduit à 20°C et sous atmosphère d 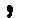 azote, 150 g de styrène, y millimoles d 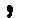 initiateur et x millimoles de radical libre stable. L 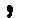 ensemble est porté à une température T (°C). L 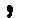 instant auquel le mélange atteint la température T est défini comme l 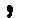 instant de départ de l 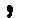 essai.

On procède alors à des prélèvements au cours du temps pour analyse :
- de la conversion en polymère ("conv" dans les tableaux), qui correspond au pourcentage en poids de solide obtenu après évaporation sous un vide de 25 mbars pendant 20 minutes à 200°C de l 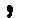 échantillon prélevé par rapport à son poids initial ;
- de la masse moléculaire moyenne en poids (Mw) et en nombre (Mn) et donc de la polydispersité P laquelle est égale à Mw/Mn, ces déterminations étant réalisées par chromatographie à perméation de gel.

Les tableaux 1 et 2 rassemblent les résultats en fonction de la nature et des quantités x et y respectivement de radical libre stable et d 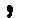 initiateur introduites. Les tableaux 1 et 2 donnent l 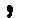 évolution de Mn, de la conversion et de la polydispersité en fonction de la durée de polymérisation à compter de l 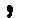 instant initial. Les exemples 10 à 16 sont comparatifs.

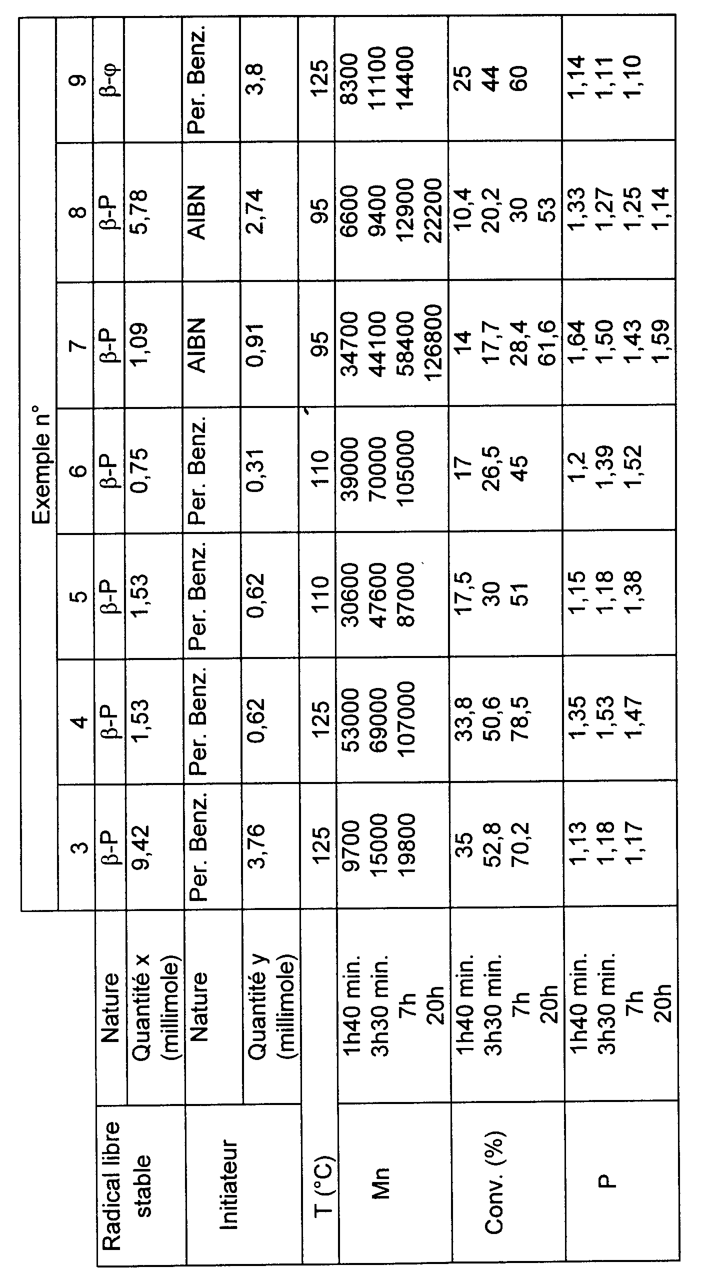

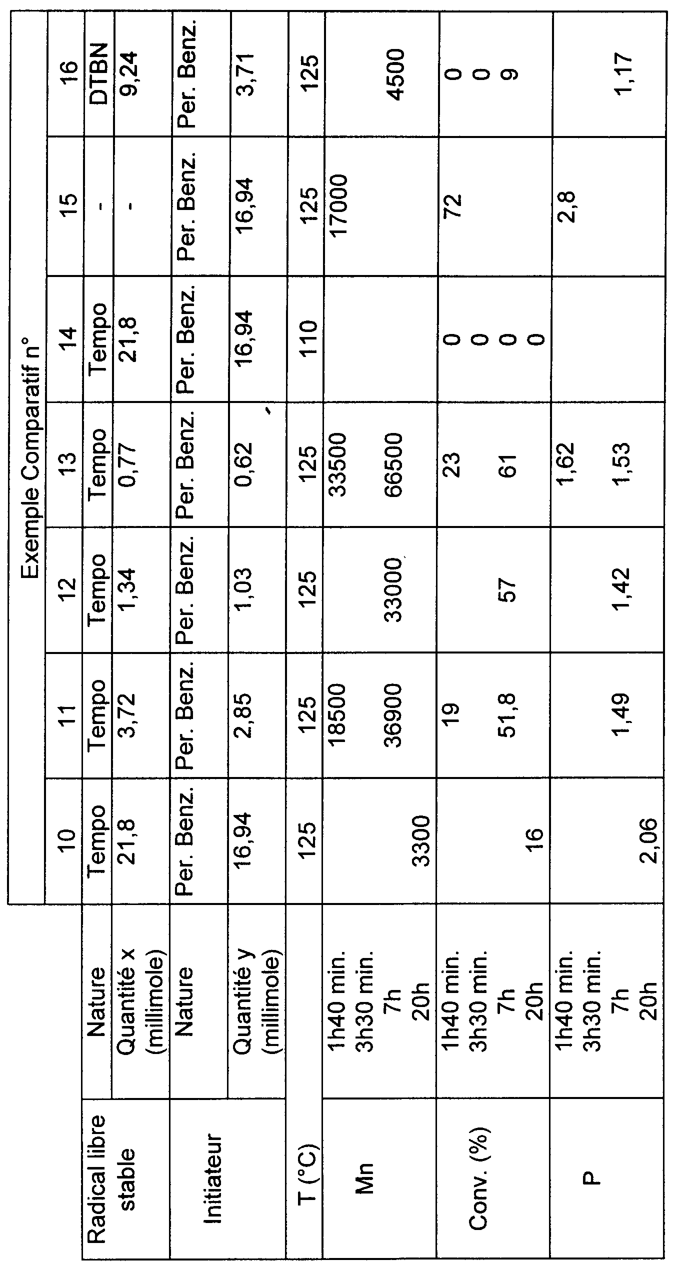

## Revendications

**1.** Procédé de polymérisation ou copolymérisation d'au moins un monomère polymérisable par voie radicalaire en présence d'un radical libre stable comprenant un enchaînement de formule 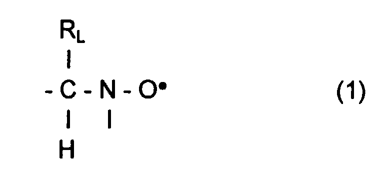 dans laquelle le radical R_{L} présente une masse molaire supérieure à 15.

**2.** Procédé selon la revendication 1 caractérisé en ce que R_{L} présente une masse molaire supérieure à 30.

**3.** Procédé selon la revendication 2 caractérisé en ce que R_{L} présente une masse molaire comprise entre 40 et 450.

**4.** Procédé selon l'une des revendications 1 à 3 caractérisé en ce que les valences restantes de l'atome de carbone et de l'atome d'azote de la formule (1) sont liées à des radicaux monovalents.

**5.** Procédé selon la revendication 5 caractérisé en ce que R_{L} peut être de formule 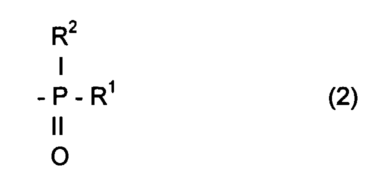 dans laquelle R1 et R2, pouvant être identiques ou différents, sont choisis parmi les halogènes, les radicaux alkyle, cycloalkyle, alkoxyle, aryloxyle, aryle, aralkyloxyle, perfluoroalkyle, aralkyle.

**7.** Procédé selon la revendication 6 caractérisé en ce que R1 et R2 comprennent de un à 20 atomes de carbone.

**8.** Procédé selon l'une des revendications 1 à 4 caractérisé en ce que R_{L} comprend au moins un cycle aromatique.

**9.** Procédé selon la revendication 8 caractérisé en ce que R_{L} est un radical phényle.

**10.** Procédé selon la revendication 1 caractérisé en ce que le radical libre stable est le N-tertiobutyl-1-diéthylphosphono-2,2-diméthylpropylnitroxyde.

**11.** Procédé selon la revendication 9 caractérisé en ce que le radical libre stable est le N-tertiobutyl-1-phényl-2-méthyl propyl nitroxyde.

**12.** Procédé selon l'une des revendications 1 à 11 caractérisé en ce que le radical libre stable est présent à raison de 50 à 50 000 ppm sur la base de la masse de monomère polymérisable.

**13.** Procédé selon l'une des revendications 1 à 11 caractérisé en ce qu'un initiateur de radicaux libres est présent.

**14.** Procédé selon la revendication 13 caractérisé en ce que l'initiateur de radicaux libres est présent à raison de 50 à 50 000 ppm sur la base de la masse de monomère polymérisable.

**15.** Procédé selon l'une des revendications 1 à 14 caractérisé en ce qu'il mène à des polymères ou copolymères de masse moléculaire moyenne en poids supérieure à 10000.

**16.** Procédé selon la revendication 15 caractérisé en ce qu'il mène à des polymères ou copolymères de masse moléculaire moyenne en poids allant de 100 000 à 400 000.

**17.** Procédé selon l'une des revendications 1 à 16 caractérisé en ce que le taux de conversion de monomère en polymère ou copolymère est supérieur à 50 %.

**18.** Procédé selon l'une des revendications 1 à 17 caractérisé en ce que au moins un monomère polymérisable est vinylaromatique.

**19.** Procédé selon la revendication 18 caractérisé en ce que au moins un monomère vinylaromatique est le styrène.

**20.** Procédé selon l'une des revendications 1 à 19 caractérisé en ce que la température est comprise entre 100 et 120°C.

**21.** Procédé selon la revendication 20 caractérisé en ce que la température est comprise entre 100 et 120°C.

**22.** Procédé selon l'une des revendications 1 à 19 caractérisé en ce que la température est comprise entre 120 et 200°C.
